# EUROPEAN PATENT SPECIFICATION

(11) **EP 3 671 115 B1**
(45) Date of publication and mention of the grant of the patent: **11.10.2023**
(21) Application number: 18213004.7
(22) Date of filing: 17.12.2018
(51) Int. Cl.: G01C 15/00

(54) **GEODETIC STAKE-OUT SYSTEM**
GEODÄTISCHES ABSTECKUNGSSYSTEM
SYSTÈME DE DÉLIMITATION GÉODÉSIQUE

(43) Date of publication of application: 24.06.2020
(73) Proprietor: Leica Geosystems AG, 9435 Heerbrugg (CH)
(72) Inventor: ZIMMERMANN, Jan, CH-9435 Heerbrugg (CH); MÖLLER, Bernd, CH-9450 Lüchingen (CH); LUX, Christoph, CH-9430 St. Margrethen (CH)
(74) Representative: Kaminski Harmann

(56) References cited:
- EP-A1- 2 105 705
- WO-A1-2013/045517
- US-A- 5 051 934
- US-A1- 2016 109 560
- US-A1- 2017 061 605

## Description

The present invention relates to a geodetic stake-out system comprising a total station and a stake-out device.

According to a common process of staking out points with a total station, a first person aligns the telescope of the total station to match a calculated horizontal (azimuth) reference angle and afterwards guides a second person carrying a stake-out device with a retro-reflector towards the targeting direction of the total station (centre of the field of view of the telescope) by hand signs or verbally. Usually, a cross-hair in the telescope helps the first person in judging where the centre is.

Once the stake-out device is in the centre, the first person adjusts the vertical alignment of the telescope, while the azimuth is untouched. When the retro-reflector is in line with the cross-hair centre, the measuring beam emitted by the total station allows for checking the distance to the retro-reflector with a measurement. With the result of the distance measurement, the first person instructs the second person to come closer or step back. The vertical angle of the telescope can again be adjusted accordingly, and the procedure starts again in an iterative approach until the measured distance is within a predefined tolerance range with regard to a reference distance.

During this distance search, the first person needs to instruct the second person several times to move the retro-reflector back towards said centre of the field of view in case it is apart from it. This procedure of guidance to the centre of the field of view is the most time consuming part of staking out.

US 5 051 934 discloses a setting out of boundary marks. US 2016/109560 A1 provides a measuring system for guiding a worker to a pile driving point. US 2017/061605 discloses a position guiding device including a mobile terminal attached to a pole. WO 2013/045517 A1 discloses a measuring system for marking a known target point, comprising a mobile marking unit and a measurement device.

Some improvements have already been developed to speed up this procedure, such as an Electronic Guide Light (EGL) system. The EGL system can emit two differently coloured light beams with adjacent light cones allowing an observer who enters the cone of the first beam to only see the colour of this first beam. When passing the centre and moving further in the same direction, only the colour of the second beam is visible to the user. The different colours indicate whether the second person (holding the stake-out device) is positioned left or right from the centre. The user is thus guided by the different colours to align the reflector at the tipping point between the two colours. At 100 m distance, the divergence of both beams is about 12 m, and the achievable positioning accuracy is roughly 5 cm.

However, a downside of this EGL solution is that the user (who is carrying the retro-reflector) must frequently look at and concentrate on the coloured lights emitted by the EGL system of the total station to distinguish whether he is right or left from the target line. Also, only three different possibilities are derivable from the EGL system, which are: (a) no light is visible means he is out of the divergence range - may it be left or right from the target line; (b) light in a first colour is visible means he is left from the centre; (c) light in a second colour is visible means he is right from the centre. He can find the centre only by interaction (iterative attempts), i.e. by searching for the tipping point of the two colours. In that, the EGL system is passive and requires lots of attention and participation of the user. Further, the user always perceives the colours from his eye's perspective and needs to interpret his conclusions to the position of the reflector.

Therefore, the invention provides an improved stake-out system to overcome the above outlined problems. A stake-out system according to the invention allows for a more accurate, safer, and more productive stake-out process.

The invention relates to a geodetic stake-out system comprising a stake-out device, a total station, and a guidance system, the stake-out device comprising a reflector and a pointing tip having a defined position relative to the reflector, the total station comprising a target unit comprising a telescope, a distance meter, and a sensor; and a direction measuring unit configured for measuring a horizontal and vertical rotational position of the target unit, the target unit configured for being rotatable horizontally and vertically, the telescope configured for being aligned such that a targeting direction of the total station is horizontally directed towards a point to be staked out, the sensor configured for generating sensor data, and the sensor data indicative for a position of the stake-out device, the guidance system comprising a guidance computer configured for generating guidance data based on the sensor data, and an output device mounted on the stake-out device configured for providing a guidance signal based on the guidance data, and a connection system configured for connecting the sensor with the guidance computer and the guidance computer with the output device, the guidance signal configured for guiding a user of the stake-out device towards a horizontal centre of the field of view of the telescope.

The total station may further comprise a light source, the sensor being configured for detecting reflections of light emitted by the light source, and the sensor data comprising a relative location on the sensor of a detected reflection caused by the reflector.

The guidance system may be configured for determining said relative location of the detected reflection as a horizontal distance between the detected reflection and a reference on the sensor, and said reference location of the sensor is representing at least a horizontal targeting direction of the distance meter.

Generating the guidance data may be based on a sequence of at least two relative locations on the sensor of respective detected reflections caused by the reflector, the sequence being indicative for a moving direction of the reflector.

The output device may be configured for providing a sequence of guidance signals, the guidance signals of the sequence being variable with regard to at least one of a frequency, an intensity, a duration, a location within the output device, and a wavelength based on the sequence of the at least two relative locations on the sensor of respective detected reflections caused by the reflector.

The output device may comprise an acoustic indicator, the guidance signal comprising an acoustic signal.

The output device may comprise a haptic indicator, the guidance signal comprising a haptic signal.

The output device may comprise a visual indicator, the guidance signal comprising a visual signal.

The output device may be configured for providing a special guidance signal if a value of the relative location of the retro-reflector is within a predefined threshold range.

Generating the guidance data may be further based on a distance measurement with the distance meter.

The invention further relates to a stake-out method with a geodetic stake-out system, the method comprising aligning a telescope comprised by a target unit of a total station such that a targeting direction of the total station is horizontally directed towards a point to be staked out, moving a stake-out device into a field of view of a sensor comprised by the target unit, generating sensor data with the sensor, the sensor data being indicative for a position of the stake-out device, receiving the sensor data with a guidance computer, generating guidance data with the guidance computer based on the sensor data, receiving the guidance data with an output device mounted on the stake-out device, and providing a guidance signal with the output device based on the guidance data.

The stake-out method may further comprise emitting a light with a light source comprised by the total station, and detecting reflections of the light with the sensor, wherein the sensor data comprise a relative location on the sensor of a detected reflection caused by the retro-reflector.

The guidance signal may comprise an acoustic signal, the acoustical signal is output with an acoustic indicator comprised by the output device.

The guidance signal may comprise a haptic signal, the haptic signal is output with a haptic indicator comprised by the output device.

The guidance signal may comprise a visual signal, the visual signal is output with a visual indicator comprised by the output device.

In the following, the invention will be described in detail by referring to exemplary embodiments that are accompanied by figures, in which:
- Fig. 1:: shows a user performing a stake-out of a point S with a stakeout system according to the invention;

- Fig. 2:: shows the situation of figure 2 from a top view;
- Fig. 3:: shows the sensor of the total station in the situation of figure 2;

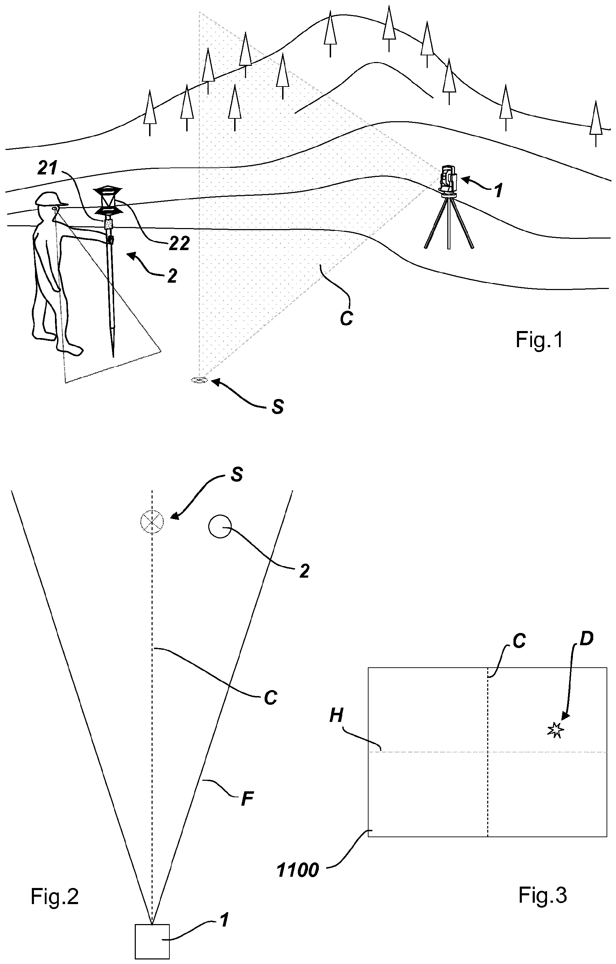

Figure 1 shows a typical stake-out situation. A total station 1 is placed in a referenced position and the telescope of the total station 1 is precisely aligned horizontally to point towards the point S to be staked out. The centre of the field of view of the telescope and/or the centre of the field of view of the sensor comprised by the total station is indicated with the vertical plane C. The plane C is hence representing the horizontal component of the targeting direction of the total station. In this example, the sensor is embodied as a camera, wherein further elements such as magnification optics may be comprised. In other embodiments the sensor can be a sensor of another type, such as infrared sensor, an ultrasonic sensor, a RADAR or LIDAR sensor, a thermal detector, etc.

A user carrying a stake-out device 2, which in this example is embodied as a surveying pole, is guided towards the centre plane C with guidance signals provided by an output device 21. Said output device 21 belongs to the guidance system and is in this example mounted on the stake-out device 2. The output device 21 could however also be embodied as a separate device external to the pole 21, e.g. as ear plugs, as a smart watch, or as any such kind of accessory which can provide signals easily perceivable for the user.

By a guidance computer, the guidance system is configured for generating guidance data based on sensor data generated by the sensor, wherein the computer can be a computer that is already comprised by the total station 1, or a computer as a separate unit attachable to or comprised by the total station 1, by the stake-out device 2, or by an external device such as a server or a controller device. The sensor data from the sensor are sent to the guidance computer, and the guidance data are sent to the output device 21 and are "translated" into guidance signals. Data transfer between the sensor and the guidance computer, and between the guidance computer and the output device is in each case ensured by a connection system. For example, such connection system comprises corresponding transmitters and receivers which are based on wireless technologies like wireless local area network, radio link, Bluetooth, etc., or the connection system provides appropriate cable connections.

The output device 21 is thus connected to said guidance computer for receiving the guidance data and can output the guidance signals derived from the guidance data as acoustic, haptic, or visual signals. Accordingly, the output device 21 can comprise at least one of an acoustic indicator (e.g. a loudspeaker), a haptic indicator (e.g. a vibrating force-feedback handle), and a visual indicator (e.g. one or more lamps). In case the guidance computer is based in the total station 1, the output device 21 is configured to receive the guidance signals wirelessly. In case the guidance computer is based in the stake-out device 2, the output device 21 could have a wired (but alternatively also a wireless) connection with the guidance computer. The stake-out device 2 further comprises a reflector 22, in this embodiment: a retro-reflector, which is precisely measurable by the measuring beam of the distance meter comprised by the target unit of the total station 1, and which is detectable by the sensor via a light emitted by a light source which is, in this embodiment, comprised by the total station 1. The reflector can also be embodied as a reflector disc. In particular, the reflector is adapted to the sensor in that it reflects what the sensor is sensitive for, i.e. for example visible radiation, infra-red radiation, ultra-violet radiation, sound waves, heat waves, etc.

In other, less specific embodiments of the geodetic stake-out system, the total station does not need to comprise such light source in order to allow the sensor to detect the reflector. The reflector, the stake-out device, the user carrying the stake-out device, or any other gadget held by the stake-out device or the user could be detected by the sensor without such light source. The sensor data generated by the sensor are indicative for a position of the reflector, the stake-out device, the user carrying the stake-out device, or any other gadget held by the stake-out device or the user. In particular, the sensor data are indicative for said position relative to the centre line C, i.e. the target line of the target unit or in other words: the horizontal alignment of the target unit. In any embodiment, the sensor data could be generated based on feature recognition algorithms or other signal analyses.

Referring back to the embodiment of Figure 1, the sensor may be an on-axis-camera with an optical axis aligned with the measurement beam axis of the distance meter, or an off-axis-camera with a known relative pose with regard to the distance meter (e.g. the pose of the off-axis-camera can be such that its optical axis is essentially parallel to the beam axis).

In case the reflector is located within the detection range of the camera and a light is emitted by the light source, a reflection of said light from said reflector is depicted in images captured by the sensor. The sensor data can be embodied as such images or derivatives from such images. An image sensor 1100 (see figure 3) of the camera is sensitive to the wavelength of the light emitted by the light source and it is therefore configured for detecting reflections of the light.

The reflections D of the light backscattered from the reflector 22 and detected on the image sensor 1100 of the camera are used by the guidance system to generate the guidance data. In particular, said guidance signals depend on the pixel distance between the detected reflection D on the sensor 1100 and the centre pixels (plane C). Figure 2 shows the situation of figure 1 and 3 from a top view. The stake-out device 2 is located within the detection range F of the camera but offset from its centre plane C, which runs through the point S to be staked out.

An exemplary work flow is as follows (with references to the system embodiment of figures 1, 2, and 3). The telescope of the total station is aimed at the desired horizontal reference angle. In other words, the telescope is targeted towards the vertical over the point S to be staked out. Once the telescope is aligned accordingly, the user could confirm this status with a user interface of or connected to the total station. The guidance system can in response be activated and wait for the camera to output a detection of the reflector (sensor data).

Now another user can pick up the stake-out device 2 and walk towards the field of view of the camera. As soon as the reflector 22 is detected by the image sensor 1100 of the camera, guidance data are generated by the guidance system and sent to the output device 21. The output device 21 may interpret the guidance data and provide elementary acoustic, haptic, and/or visual guidance signals to guide the user towards the centre C. The guidance signals are very easy to understand by the user without him being distracted. With this, the user can focus on his walking path (indicated with his field of view in figure 1), which can be rough and dangerous at a construction site, instead of looking towards the total station or the user behind the total station. Therefore, the invention improves not only ergonomics and accuracy but also safety.

In a specific example, the output device 21 could output different kinds of sounds, vibrations, and/or simple light signals to indicate different degrees of approximation with regard to the centre plane C. In particular, the guidance signals may also comprise indications whether the sought centre is left or right from the user, wherein the terms "left" and "right" refer to a notional perspective of the user facing (at least approximately) in the direction of the total station. Thus, when considering figure 1, a signal for guiding the user to go more to the right (because he is left from the centre) would mean that he would need to continue walking forwards for reaching the centre. The user can easily arrive at this conclusion because he knows that the total station 1 is located left from him.

However, the guidance system can also be configured (e.g. by comprising appropriate inertial sensors such as magnetometers, accelerometers, or gyroscopes) to track a current movement direction of the stake-out device, wherein the guidance computer is configured for generating the guidance data based further on the tracked current movement direction. For example, when tracking the current moving direction, the guidance signal could be a voice message such as "continue straight".

From the detection position D of the flash reflection on the image sensor 1100, The guidance system can derive whether the reflector is right or left from the centre plane C. Accordingly, the guidance data are generated to communicate this to the user. For example, a horizontal pixel distance is determined on the image sensor 1100 between the detected reflection D and the centre line C which act as reference pixels.

One example for a guidance signal is a spoken voice command "move to the right". In a further example, similar to the moving direction tracked by inertial sensors as mentioned above, the guidance system can also conclude from a sequence of detected reflections D whether the user is currently moving towards or away from the centre. Hence, the signal could in this case also be a spoken voice command like "continue straight" or "go back".

Another example is a certain type of tone output, in particular a different tone for each direction. In this particular case, the user would recognise e.g. from the tone colour in which direction to go. Further, each of the two tones can sound in a varying loudness depending on how far the reflector is away from the centre (determinable with the distance between the reflection D and the centre line C on the image sensor 1100).

In one example, the guidance signals can be a sequence of beep sounds, wherein the intervals between the sounds differ based on the distance between the retro-reflector and the centre. This sound scheme is similar to known parking assistants in automobiles.

Another example is a permanent sound that changes its tone colour in dependence of the distance between the retro-reflector and the centre plane. As one skilled in the art can easily understand, there are many further ways and variations of the above presented ways to embody translate the guidance signals into easy to understand signals for the user.

The same scheme as described above with sound can also analogously be realised with vibrations on a handle. In the exemplary case the output device 21 comprises a haptic indicator (e.g. force-feedback handle), this haptic indicator can output vibrations in different frequencies, intervals, intensities, etc.

Also, the handle could vibrate at different places of the handle, therewith e.g. indicating the user that the centre is more to the right with respect to the total station by vibrating on the right part of the handle. Prerequisite for this functionality is that the stake-out device 2 has a standard orientation, i.e. it is always held by the user in the same alignment and the stake-out system is configured to assume that the total station is facing usually one of the left and right side of the stake-out device (e.g. always the left side as depicted in Figure 1).

The same scheme as described above with sound and vibration can also analogously be realised with light emitted by a guiding lamp. In the exemplary case the output device 21 comprises a lamp as a visual indicator, said lamp can output light signals in different frequencies, intervals, intensities, colours, etc.

Also, the lamp could give light at different places of the lamp, therewith e.g. indicating to the user that the centre is more to the right from a perspective facing the total station by activating a light source on the right part of the lamp. Prerequisite for this is, again, that the stake-out device 2 has a standard orientation and that it is assumed that the user has a predefined rough orientation relative to the total station.

Generally, the output device 21 can output a special, i.e. distinguishable signal when the reflector is exactly in line with the centre of the target unit of the total station. In particular, when entering a horizontal threshold range around the plane C, the output device 21 could output said special signal or another special signal, clearly distinguishable from the other signals. The provision of the threshold range can make the user aware of him being very close to the centre plane C such that he will take further approaching attempts slower and more precise.

Once the reflector is precisely placed in the centre plane C, the telescope of the total station 1 would be pitched by the user of the total station in order to find the reflector with the distance meter.

When the measuring beam emitted by the distance meter is pointed on the reflector (i.e., the reflection D is detected in the crossing point of line C and line H on the sensor 1100), a distance measurement can be initiated. In case the retro-reflector is too far away or too close, the guidance system could further be configured for generating guidance signals to the output device 30 to indicate to the user to come closer towards the total station or to step back with signals distinguishable from the signals regarding the left/right direction as mentioned above.

Since it is again very likely that the reflector is departing from the centre plane C while the user is in search for the correct distance of the stake-out point S, the sensor keeps track of said deviation and feed the guidance system with the needed input. With that, the guidance system guides the user back towards the centre.

Although the invention is illustrated above, partly with reference to some preferred embodiments, it must be understood that numerous modifications and combinations of different features of the embodiments can be made. All of these modifications lie within the scope of the appended claims.

## Claims

1. A geodetic stake-out system comprising a stake-out device, a total station, and a guidance system,
the stake-out device comprising
- a reflector and
- a pointing tip having a defined position relative to the reflector,
the total station comprising
- a target unit comprising a telescope, a distance meter, and a sensor; and
- a direction measuring unit configured for measuring a horizontal and vertical rotational position of the target unit, the target unit configured for being rotatable horizontally and vertically, the sensor configured for generating sensor data, and the sensor data indicative of a position of the stake-out device, the guidance system comprising
- a guidance computer configured for generating guidance data based on the sensor data, and
- an output device mounted on the stake-out device configured for providing a guidance signal based on the guidance data, and
- a connection system configured for connecting the sensor with the guidance computer and the guidance computer with the output device, **characterized in that**
the telescope is configured for being aligned such that a targeting direction of the total station is horizontally directed towards a point to be staked out and that
the guidance signal is configured for guiding a user of the stake-out device towards a horizontal centre of the field of view of the telescope.

2. The geodetic stake-out system according to claim 1, the total station comprising
- a light source, the sensor being configured for detecting reflections of light emitted by the light source, and the sensor data comprising a relative location on the sensor of a detected reflection caused by the reflector.

3. The geodetic stake-out system according to claim 2,
the guidance system being configured for determining said relative location of the detected reflection as a horizontal distance between the detected reflection and a reference on the sensor, and
said reference location of the sensor is representing at least a horizontal targeting direction of the distance meter.

4. The geodetic stake-out system according to any of the claims 2 and 3, generating the guidance data being based on a sequence of at least two relative locations on the sensor of respective detected reflections caused by the reflector, the sequence being indicative for a moving direction of the reflector.

5. The geodetic stake-out system according to claim 4,
the output device being configured for providing a sequence of guidance signals, the guidance signals of the sequence being variable with regard to at least one of a frequency, an intensity, a duration, a location within the output device, and a wavelength based on the sequence of the at least two relative locations on the sensor of respective detected reflections caused by the reflector.

6. The geodetic stake-out system according to any of the preceding claims,
the output device comprising an acoustic indicator,
the guidance signal comprising an acoustic signal.

7. The geodetic stake-out system according to any of the preceding claims,
the output device comprising a haptic indicator,
the guidance signal comprising a haptic signal.

8. The geodetic stake-out system according to any of the preceding claims,
the output device comprising a visual indicator,
the guidance signal comprising a visual signal.

9. The geodetic stake-out system according to any of the preceding claims,
the output device being configured for providing a special guidance signal if a value of the relative location of the retro-reflector is within a predefined threshold range.

10. The geodetic stake-out system according to any of the preceding claims, generating the guidance data being further based on a distance measurement with the distance meter.

11. A stake-out method with a geodetic stake-out system, the method comprising
- aligning a telescope comprised by a target unit of a total station such that a targeting direction of the total station is horizontally directed towards a point to be staked out,
- moving a stake-out device into a field of view of a sensor comprised by the target unit,
- generating sensor data with the sensor, the sensor data being indicative of a position of the stake-out device,
- receiving the sensor data with a guidance computer,
- generating guidance data with the guidance computer based on the sensor data,
- receiving the guidance data with an output device mounted on the stake-out device, and
- providing a guidance signal with the output device based on the guidance data,
**characterized in that**
a targeting direction of the total station is horizontally directed towards a point to be staked out, and
the guidance signal guides a user of the stake-out device towards a horizontal centre of the field of view of the telescope.

12. The stake-out method according to claim 11, comprising
- emitting a light with a light source comprised by the total station,
- detecting reflections of the light with the sensor,
the sensor data comprising a relative location on the sensor of a detected reflection caused by the retro-reflector.

13. The stake-out method according to any of claim 11 and 12,
the guidance signal comprising an acoustic signal,
the acoustical signal is output with an acoustic indicator comprised by the output device.

14. The stake-out method according to any of claim 11 and 13,
the guidance signal comprising a haptic signal,
the haptic signal is output with a haptic indicator comprised by the output device.

15. The stake-out method according to any of claim 11 and 14,
the guidance signal comprising a visual signal,
the visual signal is output with a visual indicator comprised by the output device.

## Patentansprüche

1. Geodätisches Absteckungssystem, umfassend eine Absteckungsvorrichtung, eine Totalstation und ein Leitsystem,
wobei die Absteckungsvorrichtung Folgendes umfasst:
- einen Reflektor und
- eine Zeigespitze mit einer definierten Position in Bezug auf den Reflektor,
wobei die Totalstation Folgendes umfasst:
- eine Zieleinheit, die ein Teleskop, einen Abstandsmesser und einen Sensor umfasst; und
- eine Richtungsmesseinheit, die dazu konfiguriert ist, eine horizontale und vertikale Drehposition der Zieleinheit zu messen,
wobei die Zieleinheit dazu konfiguriert ist, horizontal und vertikal drehbar zu sein,
wobei der Sensor dazu konfiguriert ist, Sensordaten zu erzeugen, und
wobei die Sensordaten eine Position der Absteckungsvorrichtung angeben,
wobei das Leitsystem Folgendes umfasst:
- einen Leitcomputer, der dazu konfiguriert ist, Leitdaten auf Grundlage der Sensordaten zu erzeugen, und
- eine Ausgabevorrichtung, die an der Absteckungsvorrichtung montiert und dazu konfiguriert ist, ein Leitsignal auf Grundlage der Leitdaten bereitzustellen, und
- ein Verbindungssystem, das dazu konfiguriert ist, den Sensor mit dem Leitcomputer und den Leitcomputer mit der Ausgabevorrichtung zu verbinden,
**dadurch gekennzeichnet, dass** das Teleskop dazu konfiguriert ist, derart ausgerichtet zu werden, dass eine Zielrichtung der Totalstation horizontal auf einen abzusteckenden Punkt gerichtet ist, und dass das Leitsignal dazu konfiguriert ist, einen Benutzer der Absteckungsvorrichtung zu einer horizontalen Mitte des Sichtfeldes des Teleskops zu leiten.

2. Geodätisches Absteckungssystem nach Anspruch 1,
wobei die Totalstation Folgendes umfasst:
- eine Lichtquelle,
wobei der Sensor dazu konfiguriert ist, Reflexionen des Lichts zu detektieren, das von der Lichtquelle emittiert wird, und
wobei die Sensordaten einen relativen Ort einer durch den Reflektor verursachten detektierten Reflexion an dem Sensor umfassen.

3. Geodätisches Absteckungssystem nach Anspruch 2,
wobei das Leitsystem dazu konfiguriert ist, den relativen Ort der detektierten Reflexion als horizontalen Abstand zwischen der detektierten Reflexion und einer Referenz an dem Sensor zu bestimmen, und
wobei der Referenzort des Sensors mindestens eine horizontale Zielrichtung des Abstandsmessers darstellt.

4. Geodätisches Absteckungssystem nach einem der Ansprüche 2 und 3,
wobei das Erzeugen der Leitdaten auf einer Sequenz von mindestens zwei relativen Orten von jeweiligen durch den Reflektor verursachten detektierten Reflexionen an dem Sensor basiert, wobei die Sequenz eine Bewegungsrichtung des Reflektors angibt.

5. Geodätisches Absteckungssystem nach Anspruch 4,
wobei die Ausgabevorrichtung dazu konfiguriert ist, eine Sequenz von Leitsignalen bereitzustellen, wobei die Leitsignale der Sequenz in Bezug auf mindestens eines von einer Frequenz, einer Intensität, einer Dauer, eines Ortes innerhalb der Ausgabevorrichtung und einer Wellenlänge auf Grundlage der Sequenz der mindestens zwei relativen Orte von jeweiligen durch den Reflektor verursachten detektierten Reflexionen an dem Sensor variabel sind.

6. Geodätisches Absteckungssystem nach einem der vorhergehenden Ansprüche,
wobei die Ausgabevorrichtung einen akustischen Indikator umfasst,
wobei das Leitsignal ein akustisches Signal umfasst.

7. Geodätisches Absteckungssystem nach einem der vorhergehenden Ansprüche,
wobei die Ausgabevorrichtung einen haptischen Indikator umfasst,
wobei das Leitsignal ein haptisches Signal umfasst.

8. Geodätisches Absteckungssystem nach einem der vorhergehenden Ansprüche,
wobei die Ausgabevorrichtung einen visuellen Indikator umfasst,
wobei das Leitsignal ein visuelles Signal umfasst.

9. Geodätisches Absteckungssystem nach einem der vorhergehenden Ansprüche,
wobei die Ausgabevorrichtung dazu konfiguriert ist, ein spezielles Leitsignal bereitzustellen, wenn ein Wert des relativen Ortes des Retroreflektors innerhalb eines vordefinierten Schwellenbereichs liegt.

10. Geodätisches Absteckungssystem nach einem der vorhergehenden Ansprüche,
wobei das Erzeugen der Leitdaten ferner auf einer Abstandsmessung mit dem Abstandsmesser basiert.

11. Absteckungsverfahren mit einem geodätischen Absteckungssystem, wobei das Verfahren Folgendes umfasst:
- Ausrichten eines Teleskops, das in einer Zieleinheit einer Totalstation enthalten ist, sodass eine Zielrichtung der Totalstation horizontal auf einen abzusteckenden Punkt gerichtet ist,
- Bewegen einer Absteckungsvorrichtung in ein Sichtfeld eines Sensors, der in der Zieleinheit enthalten ist,
- Erzeugen von Sensordaten mit dem Sensor, wobei die Sensordaten eine Position der Absteckungsvorrichtung angeben,
- Empfangen der Sensordaten mit einem Leitcomputer,
- Erzeugen von Leitdaten mit dem Leitcomputer auf Grundlage der Sensordaten,
- Empfangen der Leitdaten mit einer Ausgabevorrichtung, die an der Absteckungsvorrichtung montiert ist, und
- Bereitstellen eines Leitsignals mit der Ausgabevorrichtung auf Grundlage der Leitdaten, **dadurch gekennzeichnet, dass**
eine Zielrichtung der Totalstation horizontal auf einen abzusteckenden Punkt gerichtet ist und das Leitsignal einen Benutzer der Absteckungsvorrichtung zu einer horizontalen Mitte des Sichtfeldes des Teleskops leitet.

12. Absteckungsverfahren nach Anspruch 11, umfassend
- Emittieren eines Lichts mit einer Lichtquelle, die in der Totalstation enthalten ist,
- Detektieren von Reflexionen des Lichts mit dem Sensor,
wobei die Sensordaten einen relativen Ort einer durch den Retroreflektor verursachten detektierten Reflexion an dem Sensor umfassen.

13. Absteckungsverfahren nach einem der Ansprüche 11 und 12,
wobei das Leitsignal ein akustisches Signal umfasst,
wobei das akustische Signal mit einem akustischen Indikator ausgegeben wird, der in der Ausgabevorrichtung enthalten ist.

14. Absteckungsverfahren nach einem der Ansprüche 11 und 13,
wobei das Leitsignal ein haptisches Signal umfasst,
wobei das haptische Signal mit einem haptischen Indikator ausgegeben wird, der in der Ausgabevorrichtung enthalten ist.

15. Absteckungsverfahren nach einem der Ansprüche 11 und 14,
wobei das Leitsignal ein visuelles Signal umfasst,
wobei das visuelle Signal mit einem visuellen Indikator ausgegeben wird, der in der Ausgabevorrichtung enthalten ist.

## Revendications

1. Système de piquetage géodésique comprenant un dispositif de piquetage, une station totale et un système de guidage,
le dispositif de piquetage comprenant
- un réflecteur et
- une pointe ayant une position définie par rapport au réflecteur,
la station totale comprenant
- une unité cible comprenant un télescope, un télémètre et un capteur ; et
- une unité de mesure de direction configurée pour mesurer une position de rotation horizontale et verticale de l'unité cible,
l'unité cible étant configurée pour pouvoir être mise en rotation horizontalement et verticalement,
le capteur étant configuré pour générer des données de capteur, et
les données de capteur étant indicatives d'une position du dispositif de piquetage,
le système de guidage comprenant
- un ordinateur de guidage configuré pour générer des données de guidage sur la base des données de capteur, et
- un dispositif de sortie monté sur le dispositif de piquetage configuré pour fournir un signal de guidage sur la base des données de guidage, et
- un système de connexion configuré pour connecter le capteur à l'ordinateur de guidage et l'ordinateur de guidage au dispositif de sortie, **caractérisé en ce que**
le télescope est configuré pour être aligné de sorte que la direction de ciblage de la station totale est dirigée horizontalement vers un point à piqueter et **en ce que** le signal de guidage est configuré pour guider un utilisateur du dispositif de piquetage vers un centre horizontal du champ de vision du télescope.

2. Système de piquetage géodésique selon la revendication 1,
la station totale comprenant
- une source de lumière,
le capteur étant configuré pour détecter des réflexions d'une lumière émise par la source de lumière, et
les données de capteur comprenant un emplacement relatif sur le capteur d'une réflexion détectée provoquée par le réflecteur.

3. Système de piquetage géodésique selon la revendication 2,
le système de guidage étant configuré pour déterminer ledit emplacement relatif de la réflexion détectée en tant que distance horizontale entre la réflexion détectée et une référence sur le capteur, et
ledit emplacement de référence du capteur représente au moins une direction de ciblage horizontale du télémètre.

4. Système de piquetage géodésique selon l'une quelconque des revendications 2 et 3,
la génération des données de guidage étant basée sur une séquence d'au moins deux emplacements relatifs sur le capteur de réflexions détectées respectives provoquées par le réflecteur, la séquence étant indicative pour une direction de déplacement du réflecteur.

5. Système de piquetage géodésique selon la revendication 4,
le dispositif de sortie étant configuré pour fournir une séquence de signaux de guidage, les signaux de guidage de la séquence étant variables en ce qui concerne au moins l'un parmi une fréquence, une intensité, une durée, un emplacement au sein du dispositif de sortie, et une longueur d'onde sur la base de la séquence des au moins deux emplacements relatifs sur le capteur de réflexions respectives détectées provoquées par le réflecteur.

6. Système de piquetage géodésique selon l'une quelconque des revendications précédentes,
le dispositif de sortie comprenant un indicateur acoustique,
le signal de guidage comprenant un signal acoustique.

7. Système de piquetage géodésique selon l'une quelconque des revendications précédentes,
le dispositif de sortie comprenant un indicateur haptique,
le signal de guidage comprenant un signal haptique.

8. Système de piquetage géodésique selon l'une quelconque des revendications précédentes,
le dispositif de sortie comprenant un indicateur visuel,
le signal de guidage comprenant un signal visuel.

9. Système de piquetage géodésique selon l'une quelconque des revendications précédentes,
le dispositif de sortie étant configuré pour fournir un signal de guidage spécial si une valeur de l'emplacement relatif du rétroréflecteur est dans une plage de seuils prédéfinie.

10. Système de piquetage géodésique selon l'une quelconque des revendications précédentes,
la génération des données de guidage étant en outre basée sur une mesure de distance à l'aide du télémètre.

11. Procédé de piquetage à l'aide d'un système de piquetage géodésique, le procédé comprenant
- l'alignement d'un télescope compris dans une unité cible d'une station totale, de sorte qu'une direction de ciblage de la station totale est dirigée horizontalement vers un point à piqueter,
- le déplacement d'un dispositif de piquetage dans le champ de vision d'un capteur compris dans l'unité cible,
- la génération de données de capteur à l'aide du capteur, les données de capteur étant indicatives d'une position du dispositif de piquetage,
- la réception des données de capteur à l'aide d'un ordinateur de guidage,
- la génération des données de guidage à l'aide de l'ordinateur de guidage sur la base des données du capteur,
- la réception des données de guidage à l'aide d'un dispositif de sortie monté sur le dispositif de piquetage, et
- la fourniture d'un signal de guidage à l'aide du dispositif de sortie sur la base des données de guidage,
**caractérisé en ce que**
une direction de ciblage de la station totale est dirigée horizontalement vers un point à piqueter, et
le signal de guidage guide un utilisateur du dispositif de piquetage vers un centre horizontal du champ de vision du télescope.

12. Procédé de piquetage selon la revendication 11, comprenant
- l'émission d'une lumière à l'aide d'une source de lumière comprise dans la station totale,
- la détection de réflexions de la lumière à l'aide du capteur,
les données de capteur comprenant un emplacement relatif sur le capteur d'une réflexion détectée provoquée par le rétroréflecteur.

13. Procédé de piquetage selon l'une quelconque des revendications 11 et 12,
le signal de guidage comprenant un signal acoustique,
le signal acoustique est émis à l'aide d'un indicateur acoustique compris dans le dispositif de sortie.

14. Procédé de piquetage selon l'une quelconque des revendications 11 et 13,
le signal de guidage comprenant un signal haptique,
le signal haptique est émis à l'aide d'un indicateur haptique compris dans le dispositif de sortie.

15. Procédé de piquetage selon l'une quelconque des revendications 11 et 14,
le signal de guidage comprenant un signal visuel,
le signal visuel est émis à l'aide d'un indicateur visuel compris dans le dispositif de sortie.
